# EUROPEAN PATENT APPLICATION

(11) **EP 2 809 125 A1**
(43) Date of publication of application: **03.12.2014**
(21) Application number: 13761898.9
(22) Date of filing: 07.03.2013
(51) Int. Cl.: H04W 72/12

(54) **SCHEDULING INFORMATION TRANSMISSION METHOD, DEVICE AND COMMUNICATIONS SYSTEM**

(30) Priority: 15.03.2012 CN 201210068933; 09.05.2012 CN 201210142170
(71) Applicant: Huawei Technologies Co., Ltd, Shenzhen, Guangdong 518129 (CN)
(72) Inventor: YANG, Yi, Shenzhen Guangdong 518129 (CN); WU, Gengshi, Shenzhen Guangdong 518129 (CN); HUA, Meng, Shenzhen Guangdong 518129 (CN); TIE, Xiaolei, Shenzhen Guangdong 518129 (CN); JIAO, Shurong, Shenzhen Guangdong 518129 (CN)
(74) Representative: Pfenning, Meinig & Partner GbR
(86) International application number: PCT/CN2013/072271
(87) International publication number: WO 2013/135148

(57) **Abstract**

The present invention discloses a scheduling information transmission method, device, and communications system. The method includes: generating a channel attribute parameter and a serving grant SG, where the channel attribute parameter and the SG are used for data scheduling of uplink multiple input multiple output MIMO; and delivering the channel attribute parameter and the SG to a user equipment UE through a target channel, where the channel attribute parameter is used by the terminal to determine a primary-stream enhanced dedicated channel transport format combination indicator E-TFCI and a secondary-stream E-TFCI. In the scheduling information transmission method, device, and communications system that are provided in embodiments of the present invention, the determined E-TFCIs can better adapt to different channel conditions, which improves data transmission performance.

## Description

### TECHNICAL FIELD

The present invention relates to the communications field, and in particular, to a scheduling information transmission method, device, and communications system.

### BACKGROUND

With development of communications technologies, an uplink MIMO (Multiple Input Multiple Output, multiple input multiple output) technology is widely applied. In uplink MIMO, after receiving scheduling information delivered by a base station, a UE (User Equipment, user equipment) sends a single data stream or dual data streams to the base station according to the scheduling information, and the dual data streams include a primary data stream (primary stream for short) and a secondary data stream (secondary stream for short).

Specifically, the UE receives an SG (Serving grant, serving grant), an E-TFCI (E-DCH (Enhanced Dedicated Channel, enhanced dedicated channel) Transport Format Combination Indicator, enhanced dedicated channel transport format combination indicator) offset value, and a data stream identifier corresponding to the E-TFCI offset value that are delivered by the base station; determines, according to the SG, a transmission block size of a primary stream identified by the data stream identifier; and then determines a transmission block size of a secondary stream according to the transmission block size of the primary stream and the E-TFCI offset value.

In a process of implementing the present invention, when determining a transmission block size, the UE directly uses an E-TFCI delivered by the base station. There is a problem that the E-TFCI delivered by the base station cannot completely adapt to a channel condition, which affects data transmission performance.

### SUMMARY

Embodiments of the present invention provide a scheduling information transmission method, device, and communications system, which can adjust an E-TFCI to adapt to different channel conditions and thereby improve data transmission performance.

The embodiments of the present invention adopt the following technical solutions:

A scheduling information transmission method, including:
generating a channel attribute parameter and a serving grant SG, where the channel attribute parameter and the SG are used for data scheduling of uplink multiple input multiple output MIMO; and
delivering the channel attribute parameter and the SG to a user equipment UE through a target channel, where the channel attribute parameter is used by the terminal to determine a primary-stream enhanced dedicated channel transport format combination indicator E-TFCI and a secondary-stream E-TFCI.

A data sending method, including:
receiving, through a target channel, a channel attribute parameter and an SG that are delivered by a base station, where the channel attribute information and the SG are used for data scheduling of uplink multiple input multiple output MIMO;
determining a primary-stream E-TFCI according to the SG, and determining a transmission block size of a primary stream according to the primary-stream E-TFCI;
determining a secondary-stream E-TFCI according to the primary-stream E-TFCI and the channel attribute parameter, and determining a transmission block size of a secondary stream according to the secondary-stream E-TFCI; and
sending data to the base station according to the transmission block size of the primary stream and the transmission block size of the secondary stream.

A base station, including:
a generating module, configured to generate a channel attribute parameter and a serving grant SG, where the channel attribute parameter and the SG are used for data scheduling of uplink multiple input multiple output MIMO; and
a sending module, configured to deliver the channel attribute parameter and the SG to a user equipment UE through a target channel, where the channel attribute parameter is used by the terminal to determine a primary-stream enhanced dedicated channel transport format combination indicator E-TFCI and a secondary-stream E-TFCI.

A user equipment, including:
a receiving module, configured to receive, through a target channel, a channel attribute parameter and an SG that are delivered by a base station, where the channel attribute information and the SG are used for data scheduling of uplink multiple input multiple output MIMO;
a first determining module, configured to determine a primary-stream E-TFCI according to the SG, and determine a transmission block size of a primary stream according to the primary-stream E-TFCI;
a second determining module, configured to determine a secondary-stream E-TFCI according to the primary-stream E-TFCI and the channel attribute parameter, and determine a transmission block size of a secondary stream according to the secondary-stream E-TFCI; and
a sending module, configured to send data to the base station according to the transmission block size of the primary stream and the transmission block size of the secondary stream.

A communications system, including a base station and a user equipment, where:
the base station is configured to: generate a channel attribute parameter and a serving grant SG, where the channel attribute parameter and the SG are used for data scheduling of uplink multiple input multiple output MIMO; and deliver the channel attribute parameter and the SG to the user equipment UE through a target channel, where the channel attribute parameter is used by the terminal to determine a primary-stream enhanced dedicated channel transport format combination indicator E-TFCI and a secondary-stream E-TFCI; and
the user equipment is configured to: receive, through the target channel, the channel attribute parameter and the SG that are delivered by the base station, where the channel attribute information and the SG are used for the data scheduling of the uplink multiple input multiple output MIMO; determine a primary-stream E-TFCI according to the SG, and determine a transmission block size of a primary stream according to the primary-stream E-TFCI; determine a secondary-stream E-TFCI according to the primary-stream E-TFCI and the channel attribute parameter, and determine a transmission block size of a secondary stream according to the secondary-stream E-TFCI; and send data to the base station according to the transmission block size of the primary stream and the transmission block size of the secondary stream.

In technical solutions provided in embodiments of the present invention, a primary-stream E-TFCI can be determined according to an SG delivered by a base station, and a secondary-stream E-TFCI is determined according to the primary-stream E-TFCI and a channel attribute parameter delivered by the base station. The determined E-TFCIs can better adapt to different channel conditions, which improves data transmission performance.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a scheduling information transmission method according to Embodiment 1 of the present invention;
FIG. 2 is a flowchart of a data sending method according to Embodiment 1 of the present invention;
FIG. 3A is a schematic diagram of an F-TPICH channel according to an embodiment of the present invention;
FIG. 3B is a schematic diagram of a first channel according to an embodiment of the present invention;
FIG. 4 is a flowchart of a scheduling information transmission method according to Embodiment 2 of the present invention;
FIG. 5 is a flowchart of a scheduling information transmission method according to Embodiment 3 of the present invention;
FIG. 6 is a flowchart of a scheduling information transmission method according to Embodiment 4 of the present invention;
FIG. 7 is a flowchart of a scheduling information transmission method according to Embodiment 5 of the present invention;
FIG. 8 is a schematic structural diagram of a user equipment according to Embodiment 6 of the present invention;
FIG. 9 is a schematic structural diagram of another user equipment according to Embodiment 6 of the present invention;
FIG. 10 is a schematic structural diagram of a user equipment according to Embodiment 7 of the present invention; and
FIG. 11 is a schematic structural diagram of a communications system according to Embodiment 8 of the present invention.

### DESCRIPTION OF EMBODIMENTS

To make the objectives, technical solutions, and advantages of the present invention clearer, the following further describes the embodiments of the present invention in detail with reference to the accompanying drawings.

When a UE sends dual data streams to a base station in an uplink MIMO mode, if the UE receives an absolute serving grant or a relative serving grant that is delivered by the base station for the whole UE, due to a difference such as a channel condition difference, on a base station side, there may be a demodulation performance difference between two data streams sent by the UE by using same transmit power, which affects data transmission performance. Therefore, to adapt to data conditions of a primary stream and a secondary stream, it is required to adjust transmission block sizes of the primary stream and the secondary stream.

### Embodiment 1

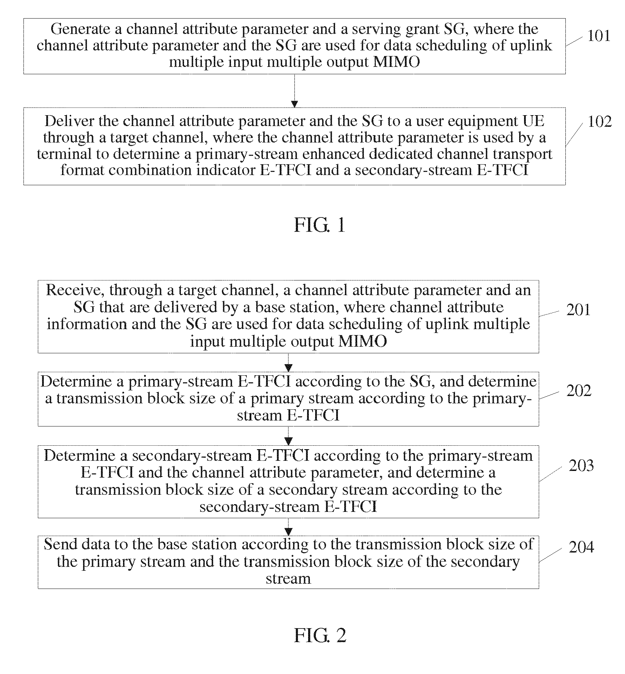

Refer to FIG. 1. This embodiment provides a scheduling information transmission method, and the method may include the following steps:
101. Generate a channel attribute parameter and a serving grant SG, where the channel attribute parameter and the SG are used for data scheduling of uplink multiple input multiple output MIMO.

The channel attribute parameter includes channel attribute information, or the channel attribute parameter includes channel attribute information and indication information, where the channel attribute information may be a dual-stream CQR (Channel Quality Ratio, channel quality ratio), a change value of a dual-stream CQR, an E-TFCI offset value, or a change value of an E-TFCI offset value, and the indication information may be a PCI (PreCoding Indication, precoding indication), rank, or a PCI and rank.

102. Deliver the channel attribute parameter and the SG to a user equipment UE through a target channel, where the channel attribute parameter is used by a terminal to determine a primary-stream enhanced dedicated channel transport format combination indicator E-TFCI and a secondary-stream E-TFCI.

The forgoing steps 101 and 102 may be implemented by a base station.

Refer to FIG. 2. This embodiment further provides a data sending method, and the method may include the following steps:
201. Receive, through a target channel, a channel attribute parameter and an SG that are delivered by a base station, where channel attribute information and the SG are used for data scheduling of uplink multiple input multiple output MIMO;
202. Determine a primary-stream E-TFCI according to the SG, and determine a transmission block size of a primary stream according to the primary-stream E-TFCI;
203. Determine a secondary-stream E-TFCI according to the primary-stream E-TFCI and the channel attribute parameter, and determine a transmission block size of a secondary stream according to the secondary-stream E-TFCI; and
204. Send data to the base station according to the transmission block size of the primary stream and the transmission block size of the secondary stream.

The forgoing steps 201, 202, 203, and 204 may be implemented by a UE.

In a method provided in this embodiment, a primary-stream E-TFCI can be determined according to an SG delivered by a base station, and a secondary-stream E-TFCI is determined according to the primary-stream E-TFCI and a channel attribute parameter delivered by the base station. The determined E-TFCIs can better adapt to different channel conditions, which improves data transmission performance.

In the foregoing embodiment, channel attribute information included in the channel attribute parameter may be a dual-stream CQR, a change value of a dual-stream CQR, an E-TFCI offset value, or a change value of an E-TFCI offset value.

Specifically, when the channel attribute information is a dual-stream CQR, the determining a secondary-stream E-TFCI according to the primary-stream E-TFCI and the channel attribute parameter in 203 includes: determining a first power offset value of an enhanced dedicated physical data channel E-DPDCH according to the primary-stream E-TFCI; determining a second power offset value of a secondary enhanced dedicated physical data channel S-E-DPDCH according to the first power offset value and the dual-stream CQR; and determining the secondary-stream E-TFCI according to the second power offset value.

When the channel attribute information is a change value of a dual-stream CQR, the determining a secondary-stream E-TFCI according to the primary-stream E-TFCI and the channel attribute parameter in 203 includes: determining a first power offset value of an enhanced dedicated physical data channel E-DPDCH according to the primary-stream E-TFCI; determining a current dual-stream CQR according to the change value of the dual-stream CQR and a dual-stream CQR at a previous point of time; determining a second power offset value of a secondary enhanced dedicated physical data channel S-E-DPDCH according to the first power offset value and the current dual-stream CQR; and determining the secondary-stream E-TFCI according to the second power offset value.

When the channel attribute information is an E-TFCI offset value, the determining a secondary-stream E-TFCI according to the primary-stream E-TFCI and the channel attribute parameter in 203 includes: obtaining a corrected E-TFCI offset value by correcting the E-TFCI offset value according to the primary-stream E-TFCI; and determining the secondary-stream E-TFCI according to the primary-stream E-TFCI and the corrected E-TFCI offset value.

When the channel attribute information is a change value of an E-TFCI offset value, the determining a secondary-stream E-TFCI according to the primary-stream E-TFCI and the channel attribute parameter in 203 includes: determining a current E-TFCI offset value according to the change value of the E-TFCI offset value and an E-TFCI offset value at a previous point of time; obtaining a corrected E-TFCI offset value by correcting the current E-TFCI offset value according to the primary-stream E-TFCI; and determining the secondary-stream E-TFCI according to the primary-stream E-TFCI and the corrected E-TFCI offset value.

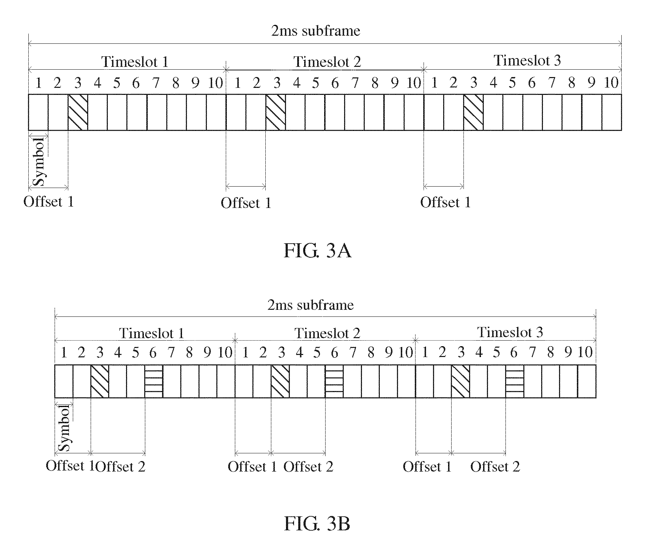

Indication information in this embodiment of the present invention may include a PCI, rank, or a PCI and rank (Rank), where the PCI is used to notify a UE of precoding that needs to be used by uplink data currently sent, and the rank is used to notify the UE that the uplink data currently sent is a single stream (single stream) or dual streams (dual stream); a target channel may be an F-TPICH (Fractional Transmitted Precoding Indicator Channel, fractional transmitted precoding indicator channel) shown in FIG. 3A, and may also be a channel in a similar format to the F-TPICH, for example, a first channel shown in FIG. 3B. Compared with FIG. 3A, in FIG. 3B, a symbol of an additional offset (offset 2 in FIG. 3B) is added in timeslot 1, timeslot 2, and timeslot 3 separately, and an offset 1 and the offset 2 in the figure may be preset.

### Embodiment 2

This embodiment describes in detail a situation in which channel attribute information included in a channel attribute parameter is a dual-stream CQR.

In a scheduling information transmission method provided in this embodiment, a base station performs uplink channel estimation by using a pilot sent by a UE, and determines, according to a criterion of a maximum channel capacity or another criterion, whether a current channel is suitable for sending data in dual data streams. If the current channel is suitable for sending dual streams, this embodiment may be used to transmit scheduling information.

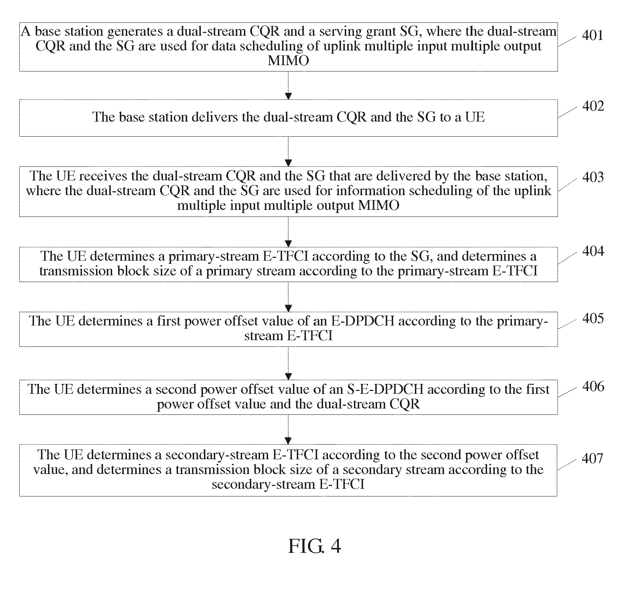

Refer to FIG. 4. The scheduling information transmission method provided in this embodiment includes the following steps:
401. A base station generates a dual-stream CQR and a serving grant SG, where the dual-stream CQR and the SG are used for data scheduling of uplink multiple input multiple output MIMO.

Specifically, a method for estimating the dual-stream CQR in this embodiment is: estimating the dual-stream CQR according to a selected best group of orthogonal precoding and an uplink channel obtained by using a primary pilot and a secondary pilot that are sent by the UE; and obtaining post-processing signal to interference plus noise ratios (post-processing SINR), for example, post-balancing signal to interference plus noise ratios, on two streams according to dual-stream transmit power estimated by means of the serving grant SG. A linear value of a post-processing signal to interference plus noise ratio of a primary stream is set to SINR1, and a linear value of a post-processing signal to interference plus noise ratio of a secondary stream is set to SINR2; then, a formula for determining the dual-stream CQR is: the dual-stream CQR=SINR1/SINR2. The dual-stream CQR may further be adjusted according to a specific application scenario, so as to ensure that a BLER (block error rate) or the number of retransmission times meets a required performance target. It should be understood that the forgoing method for estimating the dual-stream CQR is merely a specific example. In practice, another method for estimating the dual-stream CQR may also be used; for example, pre-balancing receiving signal to interference plus noise ratios on the primary pilot and the secondary pilot are directly used to estimate the dual-stream CQR. This embodiment constitutes no limitation on a method for estimating a stream CQR.

402. The base station delivers the dual-stream CQR and the SG to a UE.

In HSUPA (high speed uplink packet access, high speed uplink packet access), an SG allocated by the base station to each UE does not change frequently, but the dual-stream CQR changes frequently. Therefore, it is required to deliver the dual-stream CQR in time. In this embodiment, the base station may simultaneously deliver the dual-stream CQR and the SG to the UE, or separately deliver the dual-stream CQR and the SG to the UE. When the dual-stream CQR is delivered to the UE, the dual-stream CQR may be independently delivered to the UE; the dual-stream CQR and indication information may also be simultaneously or separately delivered to the UE; or the dual-stream CQR and indication information may also be combined into a stream information group, and the stream information group is delivered to the UE after being encoded.

Specifically, the base station may deliver the dual-stream CQR to the UE by using any one of the following methods:

### Method 1

The base station delivers the dual-stream CQR to the UE through a target channel.

For example, a preset update period is preset to 2ms, and then the base station may deliver the dual-stream CQR to a same UE through the target channel for one time or many times in 2ms. That the target channel is an F-TPICH shown in FIG. 3A is used as an example. The base station selects three symbols with an equal offset (offset 1 in FIG. 3A) in three timeslots, which are timeslot 1, timeslot 2, and timeslot 3 of a 2ms subframe. After being repeatedly encoded and modulated in a QPSK (QuadriPhase Shift Keying, QuadriPhase Shift Keying signal) modulation manner, a 3-bit dual-stream CQR is mapped to three symbols (a symbol 3 of timeslot 1, a symbol 3 of timeslot 2, and a symbol 3 of timeslot 3) of the F-TPICH shown in FIG. 3A and is delivered to the UE.

Alternatively, the base station may also deliver the dual-stream CQR to the UE through the F-TPICH shown in FIG. 3A at a specified time interval in 2ms, and deliver the dual-stream CQR to another UE through the F-TPICH shown in FIG. 3A at another time interval.

The base station delivers the dual-stream CQR for at least one time in a preset update period, and updates the dual-stream CQR in each preset update period. A preset new period may be changed according to a specific scenario. In a low-speed channel condition, the preset new period is prolonged; in a high-speed channel condition, the preset update period is shortened. For example, in a high-speed channel environment, the preset update period is set to 2ms, and the dual-stream CQR is updated once every 2ms; in a low-speed channel environment, the preset update period is set to 2*N (ms), and the dual-stream CQR is updated once every 2*N (ms), where N is an integer greater than 1.

In this method, resources occupied by the dual-stream CQR may be adjusted according to a specific scenario. When there is a high requirement for accuracy of the dual-stream CQR, a dual-stream CQR that occupies more resources may be delivered, and the dual-stream CQR that occupies more resources enables a terminal to adapt to a change of a channel condition more promptly and accurately; when resources are limited, a dual-stream CQR that occupies fewer resources may be delivered.

### Method 2

The base station delivers the dual-stream CQR and the indication information to the UE through a target channel.

In this method, the base station may deliver the dual-stream CQR and the indication information to a same UE through the target channel for one time or many times in a preset update period, where the target channel may be an F-TPICH shown in FIG. 3A, and the target channel may also be a first channel shown in FIG. 3B.

For example, after repeatedly encoding and modulating 2-bit indication information, the base station may map the 2-bit indication information to a corresponding timeslot of the target channel; after repeatedly encoding and modulating a 1-bit dual-stream CQR, the base station may map the 1-bit dual-stream CQR to a corresponding timeslot of the target channel, and deliver the 2-bit indication information and the 1-bit dual-stream CQR to the UE. That the target channel is the F-TPICH shown in FIG. 3A is used as an example. The base station selects three symbols with an equal offset (offset 1 in FIG. 3A) in three timeslots, which are timeslot 1, timeslot 2, and timeslot 3 included in a 2ms subframe in FIG. 3A. After being repeatedly encoded and being modulated in a QPSK modulation manner, the 2-bit indication information is mapped to a symbol 3 of timeslot 1 of the F-TPICH shown in FIG. 3A and a symbol 3 of timeslot 2 of the F-TPICH shown in FIG. 3A; after being repeatedly encoded and being modulated in the QPSK modulation manner, the 1-bit dual-stream CQR is mapped to a symbol 3 of timeslot 3 of the F-TPICH shown in FIG. 3A; and the 2-bit indication information and the 1-bit dual-stream CQR are delivered to the UE.

For another example, after repeatedly encoding and modulating the 2-bit indication information and 4-bit channel attribute information, the base station may also map the 2-bit indication information and the 4-bit channel attribute information to corresponding timeslots of the target channel and deliver the 2-bit indication information and the 4-bit channel attribute information to the UE. That the target channel is the first channel shown in FIG. 3B is used as an example. After repeatedly encoding and modulating the 2-bit indication information and the 4-bit channel attribute information in the QPSK modulation manner, the base station separately maps the 2-bit indication information and the 4-bit channel attribute information to six symbols (a symbol 3 and a symbol 6 of timeslot 1, a symbol 3 and a symbol 6 of timeslot 2, and a symbol 3 and a symbol 6 of timeslot 3 of the first channel shown in FIG. 3B) and delivers the 2-bit indication information and the 4-bit channel attribute information to the UE.

For another example, after repeatedly encoding and modulating 3-bit indication information and 3-bit channel attribute information, the base station separately maps the 3-bit indication information and the 3-bit channel attribute information to corresponding timeslots of the target channel and delivers the 3-bit indication information and the 3-bit channel attribute information to the UE. That the target channel is the first channel shown in FIG. 3B is used as an example. After repeatedly encoding and modulating the 3-bit indication information and the 3-bit channel attribute information in the QPSK modulation manner, the base station separately maps the 3-bit indication information and the 3-bit channel attribute information to six symbols (the symbol 3 and the symbol 6 of timeslot 1, the symbol 3 and the symbol 6 of timeslot 2, and the symbol 3 and the symbol 6 of timeslot 3 in FIG. 3B) and delivers the 3-bit indication information and the 3-bit channel attribute information to the UE.

In addition, in this method, to improve transmission reliability of stream information, indication information may be delivered to a same UE for one time or many times in a preset update period; or indication information may be delivered to a UE through the target channel at a specified time interval in a preset update period, and the indication information is delivered to another UE through the target channel at another time interval, so as to increase the number of UEs scheduled by the base station.

In this method, the base station updates the dual-stream CQR and the indication information in each preset update period. The preset update period may be changed according to a specific scenario. In a low-speed channel condition, the preset update period is prolonged; in a high-speed channel condition, the preset update period is shortened. For example, in a high-speed channel environment, the preset update period is set to 2ms, and the dual-stream CQR and the indication information are updated once every 2ms; in a low-speed channel environment, the preset update period is set to 2*N (ms), and the dual-stream CQR and the indication information are updated once every 2*N (ms), where N is an integer greater than 1.

In this method, resources occupied by the dual-stream CQR and the indication information may be adjusted according to a specific scenario. When there is a high requirement for accuracy of the dual-stream CQR and the indication information, a dual-stream CQR and indication information that occupy more resources may be delivered, and the dual-stream CQR and the indication information that occupy more resources enable a terminal to adapt to a change of a channel condition more promptly and accurately; when resources are limited, a dual-stream CQR and indication information that occupy fewer resources may be delivered.

### Method 3

The dual-stream CQR and the indication information are combined into a stream information group, and the stream information group is encoded. An encoded and modulated stream information group is delivered to the UE through a target channel.

Specifically, the base station may map the stream information group to a corresponding timeslot of the target channel after performing RM encoding on the stream information group. That the target channel is a first channel shown in FIG. 3B is used as an example. The base station combines 3-bit indication information (including a 2-bit PCI and 1-bit rank) and a 4-bit dual-stream CQR into a stream information group, maps the stream information group whose size is 7 bits to the first channel shown in FIG. 3B after encoding the stream information group into 20 bits in an RM encoding manner, and delivers the stream information group to the UE.

The base station may deliver an encoded stream information group to a same UE through the target channel for one time or many times in a preset update period; or deliver an encoded stream information group to a UE through the target channel at a specified time interval in a preset update period, and deliver the encoded stream information group to another UE at another time interval.

In this method, the base station delivers the stream information group for at least one time in a preset update period, and updates the stream information group in each preset update period. The preset update period may be changed according to a specific scenario. In a low-speed channel condition, the preset update period is prolonged; in a high-speed channel condition, the preset update period is shortened. For example, in a high-speed channel environment, the preset update period is set to 2ms, and the stream information group is updated once every 2ms; in a low-speed channel environment, the preset update period is set to 2*N (ms), and the stream information group is updated once every 2*N (ms), where N is an integer greater than 1.

In method 3, a preset update period of the stream information group is relatively long, which is relatively suitable for the low-speed channel condition.

In this method, resources occupied by the stream information group may be adjusted according to a specific scenario. When there is a high requirement for accuracy of the dual-stream CQR and the indication information, a stream information group that occupies more resources may be combined, and the stream information group that occupies more resources enables a terminal to adapt to a change of a channel condition more promptly and accurately; when resources are limited, a stream information group that occupies fewer resources may be combined.

It should be understood that the base station may separately or simultaneously deliver the SG and the dual-stream CQR, separately or simultaneously deliver the SG and the indication information, or separately or simultaneously deliver the SG and the encoded stream information group, where the stream information group includes the dual-stream CQR and the indication information, and the indication information includes a PCI, rank, or a PCI and rank. When the SG and the dual-stream CQR are separately or simultaneously delivered, the foregoing method 1 may be used; when the SG, the dual-stream CQR, and the indication information are separately or simultaneously delivered, the foregoing method 2 or method 3 may be used.

403. The UE receives the dual-stream CQR and the SG that are delivered by the base station, where the dual-stream CQR and the SG are used for information scheduling of the uplink multiple input multiple output MIMO.

Specifically, according to different methods for delivering the dual-stream CQR by the base station in 402, a method for receiving the dual-stream CQR in this step includes: receiving the dual-stream CQR delivered by the base station for at least one time in a preset update period; or receiving the dual-stream CQR and the indication information that are delivered by the base station for at least one time in a preset update period; or receiving the encoded stream information group delivered by the base station for at least one time in a preset update period, where the encoded stream information group is obtained by combining, by the base station, the dual-stream CQR and the indication information into a stream information group and performing RM encoding on the stream information group.

404. The UE determines a primary-stream E-TFCI according to the SG, and determines a transmission block size of a primary stream according to the primary-stream E-TFCI.

405. The UE determines a first power offset value of an E-DPDCH (Enhanced Dedicated Physical Data Chanel, enhanced dedicated physical data channel) according to the primary-stream E-TFCI.

The first power offset value in this embodiment may be an unquantified power offset value of the E-DPDCH.

406. The UE determines a second power offset value of an S-E-DPDCH (Secondary Enhanced Dedicated Physical Data Chanel, secondary enhanced dedicated physical data channel) according to the first power offset value and the dual-stream CQR.

The second power offset value in this embodiment may be an unquantified relative power offset value of the S-E-DPDCH.

407. The UE determines a secondary-stream E-TFCI according to the second power offset value, and determines a transmission block size of a secondary stream according to the secondary-stream E-TFCI.

When the secondary-stream E-TFCI is determined, a reference E-TFC (enhanced dedicated channel transport format combination) set that is the same as the primary-stream E-TFCI is used.

In a method provided in this embodiment, a primary-stream E-TFCI can be determined according to an SG delivered by a base station, and a secondary-stream E-TFCI is determined according to the primary-stream E-TFCI and a dual-stream CQR delivered by the base station. The determined E-TFCIs can better adapt to different channel conditions, which improves data transmission performance. The base station delivers the dual-stream CQR to a UE through a target channel, or simultaneously delivers the dual-stream CQR and indication information to a UE, which can improve transmission efficiency of scheduling information. When the dual-stream CQR and the indication information are simultaneously delivered to the UE, it is not required to define a time correspondence between the dual-stream CQR and the indication information, which can avoid occurrence of time warping between the dual-stream CQR and the indication information.

### Embodiment 3

This embodiment describes in detail a situation in which channel attribute information included in a channel attribute parameter is a change value of a dual-stream CQR.

In a scheduling information transmission method provided in this embodiment, a base station performs uplink channel estimation by using a pilot sent by a UE, and determines, according to a criterion of a maximum channel capacity or another criterion, whether a current channel is suitable for sending data in dual data streams. If the current channel is suitable for sending dual streams, this embodiment may be used to transmit scheduling information.

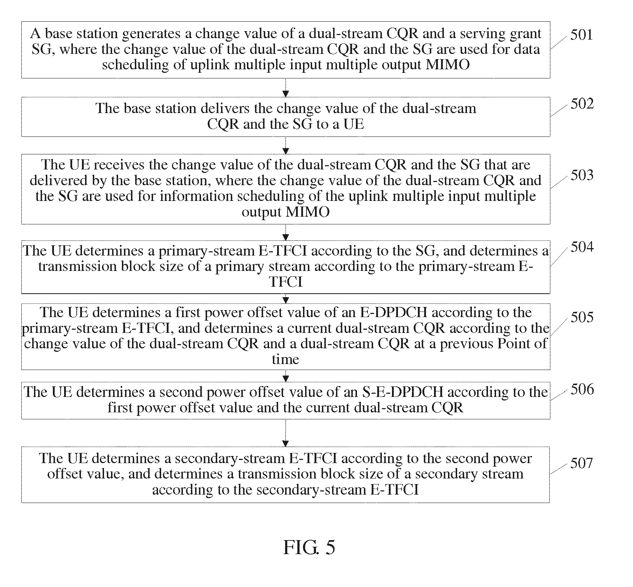

Refer to FIG. 5. The scheduling information transmission method provided in this embodiment includes the following steps:
501. A base station generates a change value of a dual-stream CQR and a serving grant SG, where the change value of the dual-stream CQR and the SG are used for data scheduling of uplink multiple input multiple output MIMO.
502. The base station delivers the change value of the dual-stream CQR and the SG to a UE.

In this embodiment, the base station may simultaneously deliver the change value of the dual-stream CQR and the SG to the UE, or separately deliver the change value of the dual-stream CQR and the SG to the UE. To deliver the change value of the dual-stream CQR to the UE, the change value of the dual-stream CQR may be independently delivered to the UE; the change value of the dual-stream CQR and indication information may also be simultaneously or separately delivered to the UE; or the change value of the dual-stream CQR and indication information may also be combined into a stream information group, and the stream information group is delivered to the UE after being encoded.

Specifically, the base station may deliver the change value of the dual-stream CQR to the UE by using any one of the following methods:

### Method 1

The base station delivers the change value of the dual-stream CQR to the UE through a target channel.

For example, a preset update period is preset to 2ms, and then the base station may deliver the change value of the dual-stream CQR to a same UE through the target channel for one time or many times in 2ms. That the target channel is an F-TPICH channel shown in FIG. 3A is used as an example. The base station selects three symbols with an equal offset (offset 1 in FIG. 3A) in three timeslots, which are timeslot 1, timeslot 2, and timeslot 3 of a 2ms subframe. After being repeatedly encoded and being modulated in a QPSK (QuadriPhase Shift Keying, QuadriPhase Shift Keying signal) modulation manner, a 3-bit change value of a dual-stream CQR is mapped to three symbols (a symbol 3 of timeslot 1, a symbol 3 of timeslot 2, and a symbol 3 of timeslot 3) of the F-TPICH channel shown in FIG. 3A and is delivered to the UE.

Alternatively, the base station may also deliver the change value of the dual-stream CQR to the UE through the F-TPICH channel shown in FIG. 3A at a specified time interval in 2ms, and deliver the change value of the dual-stream CQR to another UE through the F-TPICH channel shown in FIG. 3A at another time interval.

The base station delivers the change value of the dual-stream CQR for at least one time in a preset update period, and updates the change value of the dual-stream CQR in each preset update period. A preset new period may be changed according to a specific scenario. In a low-speed channel condition, the preset new period is prolonged; in a high-speed channel condition, the preset update period is shortened. For example, in a high-speed channel environment, the preset update period is set to 2ms, and the change value of the dual-stream CQR is updated once every 2ms; in a low-speed channel environment, the preset update period is set to 2*N (ms), and the change value of the dual-stream CQR is updated once every 2*N (ms), where N is an integer greater than 1.

In this method, resources occupied by the change value of the dual-stream CQR may be adjusted according to a specific scenario. When there is a high requirement for accuracy of the change value of the dual-stream CQR, a change value of a dual-stream CQR that occupies more resources may be delivered, and the change value of the dual-stream CQR that occupies more resources enables a terminal to adapt to a change of a channel condition more promptly and accurately; when resources are limited, a change value of a dual-stream CQR that occupies fewer resources may be delivered.

### Method 2

The base station delivers the change value of the dual-stream CQR and the indication information to the UE through a target channel.

In this method, the base station may deliver the change value of the dual-stream CQR and the indication information to a same UE through the target channel for one time or many times in a preset update period, where the target channel may be an F-TPICH channel shown in FIG. 3A, and the target channel may also be a first channel shown in FIG. 3B.

For example, after repeatedly encoding and modulating 2-bit indication information, the base station may map the 2-bit indication information to a corresponding timeslot of the target channel; after repeatedly encoding and modulating a 1-bit change value of a dual-stream CQR, the base station may map the 1-bit change value of the dual-stream CQR to a corresponding timeslot of the target channel, and deliver the 2-bit indication information and the 1-bit change value of the dual-stream CQR to the UE. That the target channel is the F-TPICH channel shown in FIG. 3A is used as an example. The base station selects three symbols with an equal offset (offset 1 in FIG. 3A) in three timeslots, which are timeslot 1, timeslot 2, and timeslot 3 included in a 2ms subframe in FIG. 3A. After being repeatedly encoded and being modulated in a QPSK modulation manner, the 2-bit indication information is mapped to a symbol 3 of timeslot 1 of the F-TPICH channel shown in FIG. 3A and a symbol 3 of timeslot 2 of the F-TPICH channel shown in FIG. 3A; after being repeatedly encoded and being modulated in the QPSK modulation manner, the 1-bit change value of the dual-stream CQR is mapped to a symbol 3 of timeslot 3 of the F-TPICH channel shown in FIG. 3A; and the 2-bit indication information and the 1-bit change value of the dual-stream CQR are delivered to the UE.

For another example, after repeatedly encoding and modulating the 2-bit indication information and 4-bit channel attribute information, the base station may also map the 2-bit indication information and the 4-bit channel attribute information to corresponding timeslots of the target channel and deliver the 2-bit indication information and the 4-bit channel attribute information to the UE. That the target channel is the first channel shown in FIG. 3B is used as an example. After repeatedly encoding and modulating the 2-bit indication information and the 4-bit channel attribute information in the QPSK modulation manner, the base station separately maps the 2-bit indication information and the 4-bit channel attribute information to six symbols (a symbol 3 and a symbol 6 of timeslot 1, a symbol 3 and a symbol 6 of timeslot 2, and a symbol 3 and a symbol 6 of timeslot 3 of the first channel shown in FIG. 3B) and delivers the 2-bit indication information and the 4-bit channel attribute information to the UE.

For another example, after repeatedly encoding and modulating 3-bit indication information and 3-bit channel attribute information, the base station separately maps the 3-bit indication information and the 3-bit channel attribute information to corresponding timeslots of the target channel and delivers the 3-bit indication information and the 3-bit channel attribute information to the UE. That the target channel is the first channel shown in FIG. 3B is used as an example. After repeatedly encoding and modulating the 3-bit indication information and the 3-bit channel attribute information in the QPSK modulation manner, the base station separately maps the 3-bit indication information and the 3-bit channel attribute information to six symbols (the symbol 3 and the symbol 6 of timeslot 1, the symbol 3 and the symbol 6 of timeslot 2, and the symbol 3 and the symbol 6 of timeslot 3 in FIG. 3B) and delivers the 3-bit indication information and the 3-bit channel attribute information to the UE.

In addition, in this method, to improve transmission reliability of stream information, indication information may be delivered to a same UE for one time or many times in a preset update period; or indication information may be delivered to a UE through the target channel at a specified time interval in a preset update period, and the indication information is delivered to another UE through the target channel at another time interval, so as to increase the number of UEs scheduled by the base station.

In this method, the base station updates the change value of the dual-stream CQR and the indication information in each preset update period. The preset update period may be changed according to a specific scenario. In a low-speed channel condition, the preset update period is prolonged; in a high-speed channel condition, the preset update period is shortened. For example, in a high-speed channel environment, the preset update period is set to 2ms, and the change value of the dual-stream CQR and the indication information are updated once every 2ms; in a low-speed channel environment, the preset update period is set to 2*N (ms), and the change value of the dual-stream CQR and the indication information are updated once every 2*N (ms), where N is an integer greater than 1.

In this method, resources occupied by the change value of the dual-stream CQR and the indication information may be adjusted according to a specific scenario. When there is a high requirement for accuracy of the change value of the dual-stream CQR and the indication information, a change value of a dual-stream CQR and indication information that occupy more resources may be delivered, and the change value of the dual-stream CQR and the indication information that occupy more resources enable a terminal to adapt to a change of a channel condition more promptly and accurately; when resources are limited, a change value of a dual-stream CQR and indication information that occupy fewer resources may be delivered.

### Method 3

The change value of the dual-stream CQR and the indication information are combined into the stream information group, and the stream information group is encoded. An encoded and modulated stream information group is delivered to the UE through a target channel.

Specifically, the base station may map the stream information group to a corresponding timeslot of the target channel after performing RM encoding on the stream information group. That the target channel is a first channel shown in FIG. 3B is used as an example. The base station combines 3-bit indication information (including a 2-bit PCI and 1-bit rank) and a 4-bit change value of a dual-stream CQR into a stream information group, maps the stream information group whose size is 7 bits to the first channel shown in FIG. 3B after encoding the stream information group to 20 bits in an RM encoding manner, and delivers the stream information group to the UE.

The base station may deliver an encoded stream information group to a same UE through the target channel for one time or many times in a preset update period; or deliver an encoded stream information group to a UE through the target channel at a specified time interval in a preset update period, and deliver the encoded stream information group to another UE at another time interval.

In this method, the base station delivers the stream information group for at least one time in a preset update period, and updates the stream information group in each preset update period. The preset update period may be changed according to a specific scenario. In a low-speed channel condition, the preset update period is prolonged; in a high-speed channel condition, the preset update period is shortened. For example, in a high-speed channel environment, the preset update period is set to 2ms, and the stream information group is updated once every 2ms; in a low-speed channel environment, the preset update period is set to 2*N (ms), and the stream information group is updated once every 2*N (ms), where N is an integer greater than 1.

In method 3, a preset update period of the stream information group is relatively long, which is relatively suitable for the low-speed channel condition.

In this method, resources occupied by the stream information group may be adjusted according to a specific scenario. When there is a high requirement for accuracy of the change value of the dual-stream CQR and the indication information, a stream information group that occupies more resources may be combined, and the stream information group that occupies more resources enables a terminal to adapt to a change of a channel condition more promptly and accurately; when resources are limited, a stream information group that occupies fewer resources may be combined.

It should be understood that the base station may separately or simultaneously deliver the SG and the change value of the dual-stream CQR, separately or simultaneously deliver the SG and the indication information, or separately or simultaneously deliver the SG and the encoded stream information group, where the stream information group includes the change value of the dual-stream CQR and the indication information, and the indication information includes a PCI, rank, or a PCI and rank. When the SG and the change value of the dual-stream CQR are separately or simultaneously delivered, the foregoing method 1 may be used; when the SG, the change value of the dual-stream CQR, and the indication information are separately or simultaneously delivered, the foregoing method 2 or method 3 may be used.

503. The UE receives the change value of the dual-stream CQR and the SG that are delivered by the base station, where the change value of the dual-stream CQR and the SG are used for information scheduling of the uplink multiple input multiple output MIMO.

Specifically, according to different methods for delivering the change value of the dual-stream CQR by the base station in 402, a method for receiving the change value of the dual-stream CQR in this step includes: receiving the change value of the dual-stream CQR delivered by the base station for at least one time in a preset update period; or receiving the change value of the dual-stream CQR and the indication information that are delivered by the base station for at least one time in a preset update period; or receiving the encoded stream information group delivered by the base station for at least one time in a preset update period, where the encoded stream information group is obtained by combining, by the base station, the change value of the dual-stream CQR and the indication information into a stream information group and performing RM encoding on the stream information group.

504. The UE determines a primary-stream E-TFCI according to the SG, and determines a transmission block size of a primary stream according to the primary-stream E-TFCI.

505. The UE determines a first power offset value of an E-DPDCH according to the primary-stream E-TrCI, and determines a current dual-stream CQR according to the change value of the dual-stream CQR and a dual-stream CQR at a previous point of time.

The first power offset value in this embodiment is an unquantified power offset value of the E-DPDCH.

506. The UE determines a second power offset value of an S-E-DPDCH according to the first power offset value and the current dual-stream CQR.

The second power offset value in this embodiment is an unquantified relative power offset value of the S-E-DPDCH.

507. The UE determines a secondary-stream E-TFCI according to the second power offset value, and determines a transmission block size of a secondary stream according to the secondary-stream E-TFCI.

When the secondary-stream E-TFCI is determined, a reference E-TFC set that is the same as the primary-stream E-TFCI is used.

In a method provided in this embodiment, a primary-stream E-TFCI can be determined according to an SG delivered by a base station, and a secondary-stream E-TFCI is determined according to the primary-stream E-TFCI and a change value of a dual-stream CQR delivered by the base station. The determined E-TFCIs can better adapt to different channel conditions, which improves data transmission performance. The base station delivers the change value of the dual-stream CQR to a UE through a target channel, or simultaneously delivers the change value of the dual-stream CQR and indication information to a UE, which can improve transmission efficiency of scheduling information. When the change value of the dual-stream CQR and the indication information are simultaneously delivered to the UE, it is not required to define a time correspondence between the change value of the dual-stream CQR and the indication information, which can avoid occurrence of time warping between the change value of the dual-stream CQR and the indication information.

### Embodiment 4

This embodiment describes in detail a situation in which channel attribute information included in a channel attribute parameter is an E-TFCI offset value.

In a scheduling information transmission method provided in this embodiment, a base station performs uplink channel estimation by using a pilot sent by a UE, and determines, according to a criterion of maximum channel capacity or another criterion, whether a current channel is suitable for sending data in dual data streams. If the current channel is suitable for sending dual streams, this embodiment may be used to transmit scheduling information.

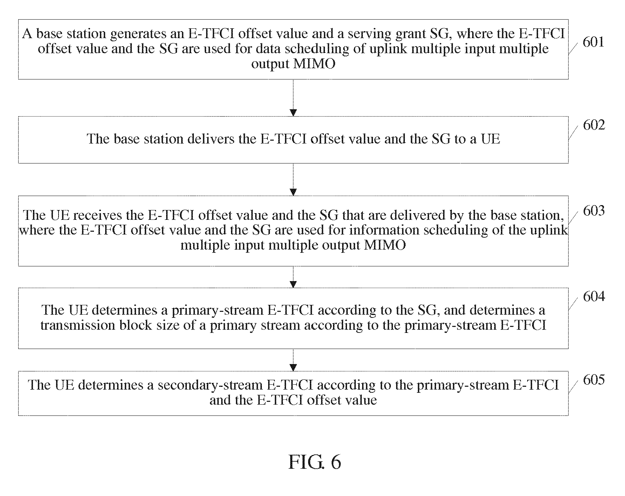

Refer to FIG. 6. The scheduling information transmission method provided in this embodiment includes the following steps:
601. A base station generates an E-TFCI offset value and a serving grant SG, where the E-TFCI offset value and the SG are used for data scheduling of uplink multiple input multiple output MIMO.
602. The base station delivers the E-TFCI offset value and the SG to a UE.

In HSUPA, an SG allocated by the base station to each UE does not change frequently, but the E-TFCI offset value changes frequently. Therefore, it is required to deliver the E-TFCI offset value in time. In this embodiment, the base station may simultaneously or separately deliver the E-TFCI offset value and the SG to the UE. To deliver the E-TFCI offset value to the UE, the E-TFCI offset value may be independently delivered to the UE; the E-TFCI offset value and indication information may also be simultaneously or separately delivered to the UE; or the E-TFCI offset value and indication information may also be combined into a stream information group, and the stream information group is delivered to the UE after being repeatedly encoded.

Specifically, the base station may deliver the E-TFCI offset value to the UE by using any one of the following methods:

### Method 1

The base station delivers the E-TFCI offset value to the UE through a target channel.

For example, a preset update period is preset to 2ms, and then the base station may deliver the E-TFCI offset value to a same UE through the target channel for one time or many times in 2ms. That the target channel is an F-TPICH channel shown in FIG. 3A is used as an example. The base station selects three symbols with an equal offset (offset 1 in FIG. 3A) in three timeslots, which are timeslot 1, timeslot 2, and timeslot 3 of a 2ms subframe. After being repeatedly encoded and being modulated in a QPSK (QuadriPhase Shift Keying, QuadriPhase Shift Keying signal) modulation manner, a 3-bit E-TFCI offset value is mapped to three symbols (a symbol 3 of timeslot 1, a symbol 3 of timeslot 2, and a symbol 3 of timeslot 3) of the F-TPICH channel shown in FIG. 3A and is delivered to the UE.

Alternatively, the base station may also deliver the E-TFCI offset value to the UE through the F-TPICH channel shown in FIG. 3A at a specified time interval in 2ms, and deliver the E-TFCI offset value to another UE through the F-TPICH channel shown in FIG. 3A at another time interval.

The base station delivers the E-TFCI offset value for at least one time in a preset update period, and updates the E-TFCI offset value in each preset update period. A preset new period may be changed according to a specific scenario. In a low-speed channel condition, the preset new period is prolonged; in a high-speed channel condition, the preset update period is shortened. For example, in a high-speed channel environment, the preset update period is set to 2ms, and the E-TFCI offset value is updated once every 2ms; in a low-speed channel environment, the preset update period is set to 2*N (ms), and the E-TFCI offset value is updated once every 2*N (ms), where N is an integer greater than 1.

In this method, resources occupied by the E-TFCI offset value may be adjusted according to a specific scenario. When there is a high requirement for accuracy of the E-TFCI offset value, an E-TFCI offset value that occupies more resources may be delivered, and the E-TFCI offset value that occupies more resources enables a terminal to adapt to a change of a channel condition more promptly and accurately; when resources are limited, an E-TFCI offset value that occupies fewer resources may be delivered.

### Method 2

The base station delivers the E-TFCI offset value and the indication information to the UE through a target channel.

In this method, the base station may deliver the E-TFCI offset value and the indication information to a same UE through the target channel for one time or many times in a preset update period, where the target channel may be an F-TPICH channel shown in FIG. 3A, and the target channel may also be a first channel shown in FIG. 3B.

For example, after repeatedly encoding and modulating 2-bit indication information, the base station may map the 2-bit indication information to a corresponding timeslot of the target channel; after repeatedly encoding and modulating a 1-bit E-TFCI offset value, the base station may map the 1-bit E-TFCI offset value to a corresponding timeslot of the target channel, and deliver the 2-bit indication information and the 1-bit E-TFCI offset value to the UE. That the target channel is the F-TPICH channel shown in FIG. 3A is used as an example. The base station selects three symbols with an equal offset (offset 1 in FIG. 3A) in three timeslots, which are timeslot 1, timeslot 2, and timeslot 3 included in a 2ms subframe in FIG. 3A. After being repeatedly encoded and being modulated in a QPSK modulation manner, the 2-bit indication information is mapped to a symbol 3 of timeslot 1 of the F-TPICH channel shown in FIG. 3A and a symbol 3 of timeslot 2 of the F-TPICH channel shown in FIG. 3A; after being repeatedly encoded and being modulated in the QPSK modulation manner, the 1-bit E-TFCI offset value is mapped to a symbol 3 of timeslot 3 of the F-TPICH channel shown in FIG. 3A; and the 2-bit indication information and the 1-bit E-TFCI offset value are delivered to the UE.

For another example, after repeatedly encoding and modulating the 2-bit indication information and 4-bit channel attribute information, the base station may also map the 2-bit indication information and the 4-bit channel attribute information to corresponding timeslots of the target channel and deliver the 2-bit indication information and the 4-bit channel attribute information to the UE. That the target channel is the first channel shown in FIG. 3B is used as an example. After repeatedly encoding and modulating the 2-bit indication information and the 4-bit channel attribute information in the QPSK modulation manner, the base station separately maps the 2-bit indication information and the 4-bit channel attribute information to six symbols (a symbol 3 and a symbol 6 of timeslot 1, a symbol 3 and a symbol 6 of timeslot 2, and a symbol 3 and a symbol 6 of timeslot 3 of the first channel shown in FIG. 3B) and delivers the 2-bit indication information and the 4-bit channel attribute information to the UE.

For another example, after repeatedly encoding and modulating 3-bit indication information and 3-bit channel attribute information, the base station separately maps the 3-bit indication information and the 3-bit channel attribute information to corresponding timeslots of the target channel and delivers the 3-bit indication information and the 3-bit channel attribute information to the UE. That the target channel is the first channel shown in FIG. 3B is used as an example. After repeatedly encoding and modulating the 3-bit indication information and the 3-bit channel attribute information in the QPSK modulation manner, the base station separately maps the 3-bit indication information and the 3-bit channel attribute information to six symbols (the symbol 3 and the symbol 6 of timeslot 1, the symbol 3 and the symbol 6 of timeslot 2, and the symbol 3 and the symbol 6 of timeslot 3 in FIG. 3B) and delivers the 3-bit indication information and the 3-bit channel attribute information to the UE.

In addition, in this method, to improve transmission reliability of stream information, indication information may be delivered to a same UE for one time or many times in a preset update period; or indication information may be delivered to a UE through the target channel at a specified time interval in a preset update period, and the indication information is delivered to another UE through the target channel at another time interval, so as to increase the number of UEs scheduled by the base station.

In this method, the base station updates the E-TFCI offset value and the indication information in each preset update period. The preset update period may be changed according to a specific scenario. In a low-speed channel condition, the preset update period is prolonged; in a high-speed channel condition, the preset update period is shortened. For example, in a high-speed channel environment, the preset update period is set to 2ms, and the E-TFCI offset value and the indication information are updated once every 2ms; in a low-speed channel environment, the preset update period is set to 2*N (ms), and the E-TFCI offset value and the indication information are updated once every 2*N (ms), where N is an integer greater than 1.

In this method, resources occupied by the E-TFCI offset value and the indication information may be adjusted according to a specific scenario. When there is a high requirement for accuracy of the E-TFCI offset value and the indication information, an E-TFCI offset value and indication information that occupy more resources may be delivered, and the E-TFCI offset value and the indication information that occupy more resources enable a terminal to adapt to a change of a channel condition more promptly and accurately; when resources are limited, an E-TFCI offset value and indication information that occupy fewer resources may be delivered.

### Method 3

The E-TFCI offset value and the indication information are combined into the stream information group, and the stream information group is encoded. An encoded and modulated stream information group is delivered to the UE through a target channel.

Specifically, the base station may map the stream information group to a corresponding timeslot of the target channel after performing RM encoding on the stream information group. That the target channel is a first channel shown in FIG. 3B is used as an example. The base station combines 3-bit indication information (including a 2-bit PCI and 1-bit rank) and a 4-bit E-TFCI offset value into a stream information group, maps the stream information group whose size is 7 bits to the first channel shown in FIG. 3B after encoding the stream information group to 20 bits in an RM encoding manner, and delivers the stream information group to the UE.

The base station may deliver an encoded stream information group to a same UE through the target channel for one time or many times in a preset update period; or deliver an encoded stream information group to a UE through the target channel at a specified time interval in a preset update period, and deliver the encoded stream information group to another UE at another time interval.

In this method, the base station delivers the stream information group for at least one time in a preset update period, and updates the stream information group in each preset update period. The preset update period may be changed according to a specific scenario. In a low-speed channel condition, the preset update period is prolonged; in a high-speed channel condition, the preset update period is shortened. For example, in a high-speed channel environment, the preset update period is set to 2ms, and the stream information group is updated once every 2ms; in a low-speed channel environment, the preset update period is set to 2*N (ms), and the stream information group is updated once every 2*N (ms), where N is an integer greater than 1.

In method 3, a preset update period of the stream information group is relatively long, which is relatively suitable for the low-speed channel condition.

In this method, resources occupied by the stream information group may be adjusted according to a specific scenario. When there is a high requirement for accuracy of the E-TFCI offset value and the indication information, a stream information group that occupies more resources may be combined, and the stream information group that occupies more resources enables a terminal to adapt to a change of a channel condition more promptly and accurately; when resources are limited, a stream information group that occupies fewer resources may be combined.

It should be understood that the base station may separately or simultaneously deliver the SG and the E-TFCI offset value, separately or simultaneously deliver the SG and the indication information, or separately or simultaneously deliver the SG and the encoded stream information group, where the stream information group includes the E-TFCI offset value and the indication information, and the indication information includes a PCI, rank, or a PCI and rank. When the SG and the E-TFCI offset value are separately or simultaneously delivered, the foregoing method 1 may be used; when the SG, the E-TFCI offset value, and the indication information are separately or simultaneously delivered, the foregoing method 2 or method 3 may be used.

603. The UE receives the E-TFCI offset value and the SG that are delivered by the base station, where the E-TFCI offset value and the SG are used for information scheduling of the uplink multiple input multiple output MIMO.

Specifically, according to different methods for delivering the E-TFCI offset value by the base station in 402, a method for receiving the E-TFCI offset value in this step includes: receiving the E-TFCI offset value delivered by the base station for at least one time in a preset update period; or receiving the E-TFCI offset value and the indication information that are delivered by the base station for at least one time in a preset update period; or receiving the encoded stream information group delivered by the base station for at least one time in a preset update period, where the encoded stream information group is obtained by combining, by the base station, the E-TFCI offset value and the indication information into a stream information group and performing RM encoding on the stream information group.

604. The UE determines a primary-stream E-TFCI according to the SG, and determines a transmission block size of a primary stream according to the primary-stream E-TFCI.

605. The UE determines a secondary-stream E-TFCI according to the primary-stream E-TFCI and the E-TFCI offset value.

In this embodiment, a corrected E-TFCI offset value is obtained by correcting the E-TFCI offset value according to the primary-stream E-TFCI, and the secondary-stream E-TFCI is determined according to the primary-stream E-TFCI and the corrected E-TFCI offset value.

Specifically, when a symmetrical precoding codebook is used, the corrected E-TFCI offset value is obtained by correcting the E-TFCI offset value according to the primary-stream E-TFCI; the secondary-stream E-TFCI is determined according to the primary-stream E-TFCI and the corrected E-TFCI offset value. When the E-TFCI offset value is corrected according to the primary-stream E-TFCI, if the primary-stream E-TFCI is large, a step length of correcting the E-TFCI offset value is large; if the primary-stream E-TFCI is small, a step length of correcting the E-TFCI offset value is small.

When no symmetrical precoding codebook is used, the corrected E-TFCI offset value is obtained by multiplying the E-TFCI offset value by a preset step length; the secondary-stream E-TFCI is determined according to the primary-stream E-TFCI and the obtained corrected E-TFCI offset value. A specific determining method is the same as the prior art, and details are not described herein again.

In this embodiment, an update speed of the stream information group is relatively low, and is suitable for the low-speed channel environment.

In a scheduling information transmission method provided in this embodiment, a primary-stream E-TFCI is determined according to an SG delivered by a base station, and a secondary-stream E-TFCI is determined according to the primary-stream E-TFCI and an E-TFCI offset value delivered by the base station, so that an E-TFCI that actually transmits data can better adapt to different channel conditions, which improves data transmission performance. The base station delivers the E-TFCI offset value to a UE through a target channel, or simultaneously delivers the E-TFCI offset value and indication information to a UE, which can improve transmission efficiency of scheduling information. When the E-TFCI offset value and the indication information are simultaneously delivered to the UE, it is not required to define a time correspondence between the E-TFCI offset value and the indication information, which can avoid occurrence of time warping between the E-TFCI offset value and the indication information.

### Embodiment 5

This embodiment describes in detail a situation in which channel attribute information is a change value of an E-TFCI offset value.

In a scheduling information transmission method provided in this embodiment, a base station performs uplink channel estimation by using a pilot sent by a UE, and determines, according to a criterion of maximum channel capacity or another criterion, whether a current channel is suitable for sending data in dual data streams. If the current channel is suitable for sending dual streams, this embodiment may be used to transmit scheduling information.

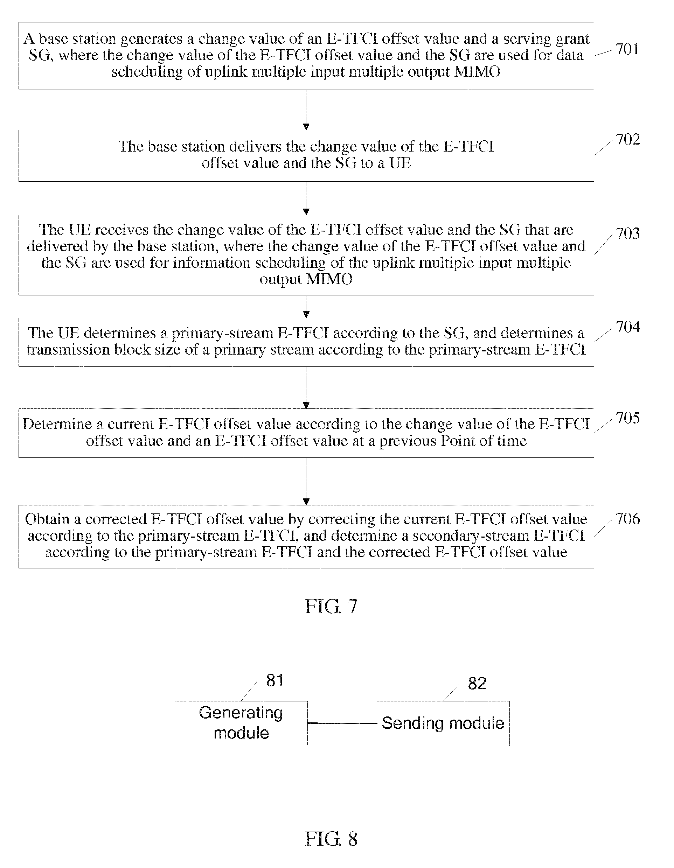

Refer to FIG. 7. The scheduling information transmission method includes the following steps:
701. A base station generates a change value of an E-TFCI offset value and a serving grant SG, where the change value of the E-TFCI offset value and the SG are used for data scheduling of uplink multiple input multiple output MIMO.
702. The base station delivers the change value of the E-TFCI offset value and the SG to a UE.

In this embodiment, the base station may simultaneously or separately deliver the change value of the E-TFCI offset value and the SG to the UE. To deliver the change value of the E-TFCI offset value to the UE, the change value of the E-TFCI offset value may be independently delivered to the UE; the change value of the E-TFCI offset value and indication information may also be simultaneously or separately delivered to the UE; or the change value of the E-TFCI offset value and indication information may also be combined into a stream information group, and the stream information group is delivered to the UE after being encoded.

Specifically, the base station may deliver the change value of the E-TFCI offset value to the UE by using any one of the following methods:

### Method 1

The base station delivers the change value of the E-TFCI offset value to the UE through a target channel.

For example, a preset update period is preset to 2ms, and then the base station may deliver the change value of the E-TFCI offset value to a same UE through the target channel for one time or many times in 2ms. That the target channel is an F-TPICH channel shown in FIG. 3A is used as an example. The base station selects three symbols with an equal offset (offset 1 in FIG. 3A) in three timeslots, which are timeslot 1, timeslot 2, and timeslot 3 of a 2ms subframe. After being repeatedly encoded and being modulated in a QPSK (QuadriPhase Shift Keying, QuadriPhase Shift Keying signal) modulation manner, a 3-bit change value of an E-TFCI offset value is mapped to three symbols (a symbol 3 of timeslot 1, a symbol 3 of timeslot 2, and a symbol 3 of timeslot 3) of the F-TPICH channel shown in FIG. 3A and is delivered to the UE.

Alternatively, the base station may also deliver the change value of the E-TFCI offset value to the UE through the F-TPICH channel shown in FIG. 3A at a specified time interval in 2ms, and deliver the change value of the E-TFCI offset value to another UE through the F-TPICH channel shown in FIG. 3A at another time interval.

The base station delivers the change value of the E-TFCI offset value for at least one time in a preset update period, and updates the change value of the E-TFCI offset value in each preset update period. A preset new period may be changed according to a specific scenario. In a low-speed channel condition, the preset new period is prolonged; in a high-speed channel condition, the preset update period is shortened. For example, in a high-speed channel environment, the preset update period is set to 2ms, and the change value of the E-TFCI offset value is updated once every 2ms; in a low-speed channel environment, the preset update period is set to 2*N (ms), and the change value of the E-TFCI offset value is updated once every 2*N (ms), where N is an integer greater than 1.

In this method, resources occupied by the change value of the E-TFCI offset value may be adjusted according to a specific scenario. When there is a high requirement for accuracy of the change value of the E-TFCI offset value, a change value of an E-TFCI offset value that occupies more resources may be delivered, and the change value of the E-TFCI offset value that occupies more resources enables a terminal to adapt to a change of a channel condition more promptly and accurately; when resources are limited, a change value of an E-TFCI offset value that occupies fewer resources may be delivered.

### Method 2

The base station delivers the change value of the E-TFCI offset value and the indication information to the UE through a target channel.

In this method, the base station may deliver the change value of the E-TFCI offset value and the indication information to a same UE through the target channel for one time or many times in a preset update period, where the target channel may be an F-TPICH channel shown in FIG. 3A, and the target channel may also be a first channel shown in FIG. 3B.

For example, after repeatedly encoding and modulating 2-bit indication information, the base station may map the 2-bit indication information to a corresponding timeslot of the target channel; after repeatedly encoding and modulating a 1-bit change value of an E-TFCI offset value, the base station may map the 1-bit change value of the E-TFCI offset value to a corresponding timeslot of the target channel, and deliver the 2-bit indication information and the 1-bit change value of the E-TFCI offset value to the UE. That the target channel is the F-TPICH channel shown in FIG. 3A is used as an example. The base station selects three symbols with an equal offset (offset 1 in FIG. 3A) in three timeslots, which are timeslot 1, timeslot 2, and timeslot 3 included in a 2ms subframe in FIG. 3A. After being repeatedly encoded and being modulated in a QPSK modulation manner, the 2-bit indication information is mapped to a symbol 3 of timeslot 1 of the F-TPICH channel shown in FIG. 3A and a symbol 3 of timeslot 2 of the F-TPICH channel shown in FIG. 3A; after being repeatedly encoded and being modulated in the QPSK modulation manner, the 1-bit change value of the E-TFCI offset value is mapped to a symbol 3 of timeslot 3 of the F-TPICH channel shown in FIG. 3A; and the 2-bit indication information and the 1-bit change value of the E-TFCI offset value are delivered to the UE.

For another example, after repeatedly encoding and modulating the 2-bit indication information and 4-bit channel attribute information, the base station may also map the 2-bit indication information and the 4-bit channel attribute information to corresponding timeslots of the target channel and deliver the 2-bit indication information and the 4-bit channel attribute information to the UE. That the target channel is the first channel shown in FIG. 3B is used as an example. After repeatedly encoding and modulating the 2-bit indication information and the 4-bit channel attribute information in the QPSK modulation manner, the base station separately maps the 2-bit indication information and the 4-bit channel attribute information to six symbols (a symbol 3 and a symbol 6 of timeslot 1, a symbol 3 and a symbol 6 of timeslot 2, and a symbol 3 and a symbol 6 of timeslot 3 of the first channel shown in FIG. 3B) and delivers the 2-bit indication information and the 4-bit channel attribute information to the UE.

For another example, after repeatedly encoding and modulating 3-bit indication information and 3-bit channel attribute information, the base station separately maps the 3-bit indication information and the 3-bit channel attribute information to corresponding timeslots of the target channel and delivers the 3-bit indication information and the 3-bit channel attribute information to the UE. That the target channel is the first channel shown in FIG. 3B is used as an example. After repeatedly encoding and modulating the 3-bit indication information and the 3-bit channel attribute information in the QPSK modulation manner, the base station separately maps the 3-bit indication information and the 3-bit channel attribute information to six symbols (the symbol 3 and the symbol 6 of timeslot 1, the symbol 3 and the symbol 6 of timeslot 2, and the symbol 3 and the symbol 6 of timeslot 3 in FIG. 3B) and delivers the 3-bit indication information and the 3-bit channel attribute information to the UE.

In addition, in this method, to improve transmission reliability of stream information, indication information may be delivered to a same UE for one time or many times in a preset update period; or indication information may be delivered to a UE through the target channel at a specified time interval in a preset update period, and the indication information is delivered to another UE through the target channel at another time interval, so as to increase the number of UEs scheduled by the base station.

In this method, the base station updates the change value of the E-TFCI offset value and the indication information in each preset update period. The preset update period may be changed according to a specific scenario. In a low-speed channel condition, the preset update period is prolonged; in a high-speed channel condition, the preset update period is shortened. For example, in a high-speed channel environment, the preset update period is set to 2ms, and the change value of the E-TFCI offset value and the indication information are updated once every 2ms; in a low-speed channel environment, the preset update period is set to 2*N (ms), and the change value of the E-TFCI offset value and the indication information are updated once every 2*N (ms), where N is an integer greater than 1.

In this method, resources occupied by the change value of the E-TFCI offset value and the indication information may be adjusted according to a specific scenario. When there is a high requirement for accuracy of the change value of the E-TFCI offset value and the indication information, a change value of an E-TFCI offset value and indication information that occupy more resources may be delivered, and the change value of the E-TFCI offset value and the indication information that occupy more resources enable a terminal to adapt to a change of a channel condition more promptly and accurately; when resources are limited, a change value of an E-TFCI offset value and indication information that occupy fewer resources may be delivered.

### Method 3

The change value of the E-TFCI offset value and the indication information are combined into the stream information group, and the stream information group is encoded. An encoded and modulated stream information group is delivered to the UE through a target channel.

Specifically, the base station may map the stream information group to a corresponding timeslot of the target channel after performing RM encoding on the stream information group. That the target channel is a first channel shown in FIG. 3B is used as an example. The base station combines 3-bit indication information (including a 2-bit PCI and 1-bit rank) and a 4-bit change value of an E-TFCI offset value into a stream information group, maps the stream information group whose size is 7 bits to the first channel shown in FIG. 3B after encoding the stream information group to 20 bits in an RM encoding manner, and delivers the stream information group to the UE.

The base station may deliver an encoded stream information group to a same UE through the target channel for one time or many times in a preset update period; or deliver an encoded stream information group to a UE through the target channel at a specified time interval in a preset update period, and deliver the encoded stream information group to another UE at another time interval.

In this method, the base station delivers the stream information group for at least one time in a preset update period, and updates the stream information group in each preset update period. The preset update period may be changed according to a specific scenario. In a low-speed channel condition, the preset update period is prolonged; in a high-speed channel condition, the preset update period is shortened. For example, in a high-speed channel environment, the preset update period is set to 2ms, and the stream information group is updated once every 2ms; in a low-speed channel environment, the preset update period is set to 2*N (ms), and the stream information group is updated once every 2*N (ms), where N is an integer greater than 1.

In method 3, a preset update period of the stream information group is relatively long, which is relatively suitable for the low-speed channel condition.

In this method, resources occupied by the stream information group may be adjusted according to a specific scenario. When there is a high requirement for accuracy of the change value of the E-TFCI offset value and the indication information, a stream information group that occupies more resources may be combined, and the stream information group that occupies more resources enables a terminal to adapt to a change of a channel condition more promptly and accurately; when resources are limited, a stream information group that occupies fewer resources may be combined.

It should be understood that the base station may separately or simultaneously deliver the SG and the change value of the E-TFCI offset value, separately or simultaneously deliver the SG and the indication information, or separately or simultaneously deliver the SG and the encoded stream information group, where the stream information group includes the change value of the E-TFCI offset value and the indication information, and the indication information includes a PCI, rank, or a PCI and rank. When the SG and the change value of the E-TFCI offset value are separately or simultaneously delivered, the foregoing method 1 may be used; when the SG, the change value of the E-TFCI offset value, and the indication information are separately or simultaneously delivered, the foregoing method 2 or method 3 may be used.

703. The UE receives the change value of the E-TFCI offset value and the SG that are delivered by the base station, where the change value of the E-TFCI offset value and the SG are used for information scheduling of the uplink multiple input multiple output MIMO.

Specifically, according to different methods for delivering the change value of the E-TFCI offset value by the base station in 402, a method for receiving the change value of the E-TFCI offset value in this step includes: receiving the change value of the E-TFCI offset value delivered by the base station for at least one time in a preset update period; or receiving the change value of the E-TFCI offset value and the indication information that are delivered by the base station for at least one time in a preset update period; or receiving the encoded stream information group delivered by the base station for at least one time in a preset update period, where the encoded stream information group is obtained by combining, by the base station, the change value of the E-TFCI offset value and the indication information into a stream information group and performing RM encoding on the stream information group.

704. The UE determines a primary-stream E-TFCI according to the SG, and determines a transmission block size of a primary stream according to the primary-stream E-TFCI.

705. Determine a current E-TFCI offset value according to the change value of the E-TFCI offset value and an E-TFCI offset value at a previous point of time.

706. Obtain a corrected E-TFCI offset value by correcting the current E-TFCI offset value according to the primary-stream E-TFCI, and determine a secondary-stream E-TFCI according to the primary-stream E-TFCI and the corrected E-TFCI offset value.

In a scheduling information transmission method provided in this embodiment, a primary-stream E-TFCI is determined according to an SG delivered by a base station, and a secondary-stream E-TFCI is determined according to the primary-stream E-TFCI and a change value of an E-TFCI offset value delivered by the base station, so that an E-TFCI that actually transmits data can better adapt to different channel conditions, which improves data transmission performance. The base station delivers the change value of the E-TFCI offset value to a UE through a target channel, or simultaneously delivers the change value of the E-TFCI offset value and indication information to a UE, which can improve transmission efficiency of scheduling information. When the E-TFCI offset value and the indication information are simultaneously delivered to the UE, it is not required to define a time correspondence between the change value of the E-TFCI offset value and the indication information, which can avoid occurrence of time warping between the change value of the E-TFCI offset value and the indication information.

### Embodiment 6

Refer to FIG. 8. This embodiment provides a base station, and the base station includes: a generating module 81 and a sending module 82.

The generating module 81 is configured to generate a channel attribute parameter and a serving grant SG, where the channel attribute parameter and the SG are used for data scheduling of uplink multiple input multiple output MIMO.

The channel attribute parameter includes channel attribute information, or the channel attribute parameter includes channel attribute information and indication information, where the channel attribute information may be a dual-stream CQR, a change value of a dual-stream CQR, an E-TFCI offset value, or a change value of an E-TFCI offset value, and the indication information may be a PCI, rank, or a PCI and rank.

The sending module 82 is configured to deliver the channel attribute parameter and the SG to a user equipment UE through a target channel, where the channel attribute parameter is used by a terminal to determine a primary-stream enhanced dedicated channel transport format combination indicator E-TFCI and a secondary-stream E-TFCI.

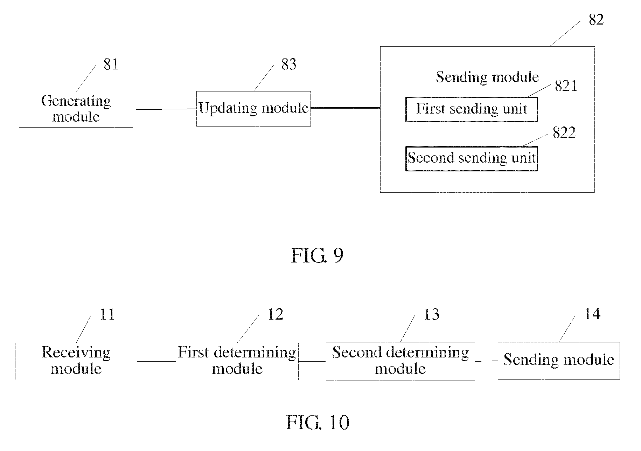

Optionally, as shown in FIG. 9, the sending module 82 may include any one of the following units: a first sending unit 821 and a second sending unit 822, where:
the first sending unit 821 is configured to deliver the channel attribute information to the UE through the target channel; and
the second sending unit 822 is configured to deliver the channel attribute information and the indication information to the UE through the target channel.

Preferably, the first sending unit 821 may specifically be configured for the first sending unit, and is specifically configured to: after repeatedly encoding and modulating the channel attribute information, map the channel attribute information to a corresponding timeslot of the target channel and deliver the channel attribute information to the UE.

The second sending unit 822 may specifically be configured to: after repeatedly encoding and modulating the channel attribute information and the indication information, separately map the channel attribute information and the indication information to corresponding timeslots of the target channel and deliver the channel attribute information and the indication information to the UE; or
the second sending unit 822 may specifically be configured to: combine the channel attribute information and the indication information into a stream information group, encode the stream information group, map the stream information group to a corresponding timeslot of the target channel, and deliver the stream information group to the UE.

Preferably, the sending module 82 may specifically be configured to deliver the channel attribute parameter to the UE for at least one time in a preset update period, where the channel attribute parameter includes the channel attribute information, or the channel attribute parameter includes the channel attribute information and the indication information; or
the sending module 82 may specifically be configured to deliver the channel attribute parameter to the UE at a specified time interval in a preset update period, where the channel attribute parameter includes the channel attribute information, or the channel attribute parameter includes the channel attribute information and the indication information.

Further, as shown in FIG. 9, the foregoing base station may further include an updating module 83, which is configured to update the channel attribute parameter according to a preset update period, where the channel attribute parameter includes the channel attribute information, or the channel attribute parameter includes the channel attribute information and the indication information.

The base station provided in this embodiment can perform corresponding steps in the foregoing method embodiments.

In a base station provided in this embodiment, an SG and a channel attribute parameter are delivered to a UE, so that the UE determines a primary-stream E-TFCI according to the SG, and determines a secondary-stream E-TFCI according to the primary-stream E-TFCI and the channel attribute parameter. The determined E-TFCIs can better adapt to different channel conditions, which improves data transmission performance. A channel attribute parameter that includes channel attribute information is delivered to the UE through a target channel, or a channel attribute parameter that includes channel attribute information and indication information is delivered to the UE through a target channel, which can improve transmission efficiency of scheduling information. Delivering the channel attribute parameter that includes the channel attribute information and the indication information to the UE through the target channel can further avoid occurrence of time warping between a change value of an E-TFCI offset value and the indication information.

### Embodiment 7

As shown in FIG. 10, this embodiment provides a user equipment, and the user equipment includes: a receiving module 11, a first determining module 12, a second determining module 13, and a sending module 14, where:
the receiving module 11 is configured to receive, through a target channel, a channel attribute parameter and an SG that are delivered by a base station, where channel attribute information and the SG are used for data scheduling of uplink multiple input multiple output MIMO;
the first determining module 12 is configured to determine a primary-stream E-TFCI according to the SG, and determine a transmission block size of a primary stream according to the primary-stream E-TFCI;
the second determining module 13 is configured to determine a secondary-stream E-TFCI according to the primary-stream E-TFCI and the channel attribute parameter, and determine a transmission block size of a secondary stream according to the secondary-stream E-TFCI; and
the sending module 14 is configured to send data to a base station with a primary and secondary stream quality difference according to a transmission block size of a primary stream with a primary and secondary stream quality difference and a transmission block size of a secondary stream with a primary and secondary stream quality difference.

Preferably, the channel attribute parameter received by the receiving module 11 includes channel attribute information, and when the channel attribute information is a dual-stream CQR, the second determining module 13 may specifically be configured to: determine a first power offset value of an enhanced dedicated physical data channel E-DPDCH according to the primary-stream E-TFCI; determine a second power offset value of a secondary enhanced dedicated physical data channel S-E-DPDCH according to the first power offset value and the dual-stream CQR; and determine the secondary-stream E-TFCI according to the second power offset value. Preferably, the channel attribute parameter received by the receiving module 11 includes the channel attribute information, and when the channel attribute information is a change value of a dual-stream CQR, the second determining module 13 may specifically be configured to: determine the first power offset value of the enhanced dedicated physical data channel E-DPDCH according to the primary-stream E-TFCI; determine a current dual-stream CQR according to the change value of the dual-stream CQR and a dual-stream CQR at a previous point of time; determine the second power offset value of the secondary enhanced dedicated physical data channel S-E-DPDCH according to the first power offset value and the current dual-stream CQR; and determine the secondary-stream E-TFCI according to the second power offset value.

Preferably, the channel attribute parameter received by the receiving module 11 includes the channel attribute information, and when the channel attribute information is an E-TFCI offset value, the second determining module 13 may specifically be configured to: obtain a corrected E-TFCI offset value by correcting the E-TFCI offset value according to the primary-stream E-TFCI; and determine the secondary-stream E-TFCI according to the primary-stream E-TFCI and the corrected E-TFCI offset value.

Preferably, the channel attribute parameter received by the receiving module 11 includes the channel attribute information, and when the channel attribute information is a change value of an E-TFCI offset value, the second determining module 13 may be configured to: determine a current E-TFCI offset value according to the change value of the E-TFCI offset value and an E-TFCI offset value at a previous point of time; obtain a corrected E-TFCI offset value by correcting the current E-TFCI offset value according to the primary-stream E-TFCI; and determine the secondary-stream E-TFCI according to the primary-stream E-TFCI and the corrected E-TFCI offset value.

The user equipment provided in this embodiment can perform corresponding steps in the foregoing method embodiments.

In a user equipment provided in this embodiment, a primary-stream E-TFCI is determined according to an SG delivered by a base station, and a secondary-stream E-TFCI is determined according to the primary-stream E-TFCI and channel attribute information included in a channel attribute parameter delivered by the base station. The determined E-TFCIs can better adapt to different channel conditions, which improves data transmission performance. A channel attribute parameter that includes channel attribute information is received through a target channel, or a channel attribute parameter that includes channel attribute information and indication information is received through a target channel, which can improve transmission efficiency of scheduling information. Receiving the channel attribute parameter that includes the channel attribute information and the indication information through the target channel can further avoid occurrence of time warping between a change value of an E-TFCI offset value and the indication information.

### Embodiment 8

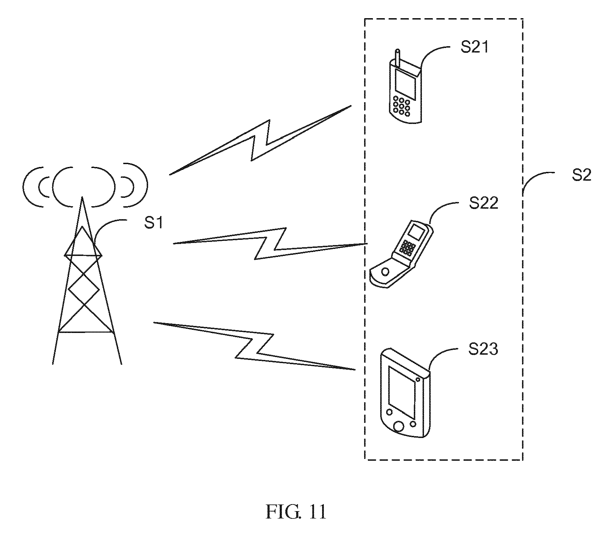

As shown in FIG. 11, this embodiment provides a communications system, and the communications system includes: a base station S1 and at least one user equipment S2, where the user equipment S2 may be an S21, an S22, and an S23 shown in FIG. 11. It should be understood that the user equipment S2 may also be another device that has a communications function.

Specifically, modules and units that are included in the base station S1, and specific functions of each module and unit are the same as those of the base station provided in the foregoing Embodiment 6; for details, refer to Embodiment 6. Modules and units that are included in the user equipment S2, and specific functions of each module and unit are the same as those of the user equipment provided in Embodiment 7; for details, refer to Embodiment 7.

In a communications system provided in this embodiment, a base station delivers a channel attribute parameter and an SG to a UE, and the UE determines a primary-stream E-TFCI according to the SG, and determines a secondary-stream E-TFCI according to the primary-stream E-TFCI and the channel attribute parameter. The determined E-TFCIs can better adapt to different channel conditions, which improves data transmission performance. The base station delivers a channel attribute parameter that includes channel attribute information to the UE through a target channel, or delivers a channel attribute parameter that includes channel attribute information and indication information to the UE through a target channel, which can improve transmission efficiency of scheduling information. Delivering the channel attribute parameter that includes the channel attribute information and the indication information to the UE through the target channel can further avoid occurrence of time warping between a change value of an E-TFCI offset value and the indication information.

A scheduling information transmission method, device, and communications system that are provided in embodiments of the present invention are mainly used in scheduling information transmission, which can improve data transmission performance.

It should be noted that: when the base station and the user equipment that are provided in the foregoing embodiments are presented, description is given only using division of the foregoing functional modules. In practice, the functions may be allocated to different functional modules for implementation as required. To be specific, an internal structure of the device is divided into different functional modules to implement all or a part of the functions described above. In addition, the base station and the user equipment that are provided in the foregoing embodiments are based on the same inventive concept as the scheduling information transmission method. For a specific implementation process, refer to the method embodiments, and details are not described herein again.

Solutions of the present invention may be described in common contexts of computer executable instructions executed by a computer, such as a program unit. Generally, the program unit includes a routine, a program, an object, a component, a data structure, and the like that execute a specific task or implements a specific abstract data type. The solutions of the present invention may also be practiced in distributed computing environments. In these distributed computing environments, tasks are executed by remote processing devices that are connected by using a communications network. In the distributed computing environments, the program unit may be located in local and remote computer storage mediums such as storage devices.

The embodiments in this specification are all described in a progressive manner, for same or similar parts in the embodiments, reference may be made to these embodiments, and each embodiment focuses on a difference from other embodiments. Especially, an apparatus embodiment is basically similar to a method embodiment, and therefore is described briefly; for related parts, reference may be made to partial descriptions in the method embodiment. The described apparatus embodiment is merely exemplary. The units described as separate parts may or may not be physically separate, and parts displayed as units may or may not be physical units, may be located in one position, or may be distributed on a plurality of network units. Apart or all of the modules may be selected according to actual needs to achieve the objectives of the solutions of the embodiments. A person of ordinary skill in the art may understand and implement the embodiments of the present invention without creative efforts.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or combined into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Apart or all of the units may be selected according to actual needs to achieve the objectives of the solutions of the embodiments.

In addition, functional units in the embodiments of the present invention may be combined into one processing unit, or each of the units may exist alone physically, or two or more units are combined into one unit.

When the functions are implemented in a form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The software product is stored in a storage medium, and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

By means of description of the foregoing embodiments, a person skilled in the art may clearly understand that the present invention may be implemented by using computer software plus necessary universal hardware and by using hardware, including an combined circuit, a universal CPU, a universal memory, a universal component, and the like, and certainly may further be implemented by using dedicated hardware such as a dedicated combined circuit, a dedicated CPU, a dedicated memory, and a dedicated component, but in many cases, the former is a better implementation manner. Based on such an understanding, the technical solutions of the present invention essentially or the part contributing to the prior art may be implemented in a form of a software product. The software product is stored in a readable storage medium, such as a floppy disk, a hard disk or an optical disc of a computer, and includes several instructions for instructing a computer device (which may be a personal computer, a server, or a network device) to perform the methods described in the embodiments of the present invention.

The foregoing descriptions are merely exemplary embodiments of the present invention, but are not intended to limit the present invention. Any modification, equivalent replacement, and improvement made without departing from the spirit and principle of the present invention shall fall within the protection scope of the present invention.

## Claims

1. A scheduling information transmission method, comprising:
generating a channel attribute parameter and a serving grant SG, wherein the channel attribute parameter and the SG are used for data scheduling of uplink multiple input multiple output MIMO; and
delivering the channel attribute parameter and the SG to a user equipment UE through a target channel, wherein the channel attribute parameter is used by the terminal to determine a primary-stream enhanced dedicated channel transport format combination indicator E-TFCI and a secondary-stream E-TFCI.

2. The method according to claim 1, wherein the channel attribute parameter comprises channel attribute information, and the delivering the channel attribute parameter to a user equipment UE through a target channel comprises:
delivering the channel attribute information to the UE through the target channel.

3. The method according to claim 2, wherein the delivering the channel attribute information to the UE through the target channel comprises:
after repeatedly encoding and modulating the channel attribute information, mapping the channel attribute information to a corresponding timeslot of the target channel and delivering the channel attribute information to the UE.

4. The method according to claim 1, wherein the channel attribute parameter comprises channel attribute information and indication information, and the delivering the channel attribute parameter to a user equipment UE through a target channel comprises:
delivering the channel attribute information and the indication information to the UE through the target channel.

5. The method according to claim 4, wherein the delivering the channel attribute information and the indication information to the UE through the target channel comprises:
after repeatedly encoding and modulating the channel attribute information and the indication information, mapping the channel attribute information and the indication information to corresponding timeslots of the target channel respectively and delivering the channel attribute information and the indication information to the UE.

6. The method according to claim 4, wherein the delivering the channel attribute information and the indication information to the UE through the target channel comprises:
combining the channel attribute information and the indication information into a stream information group, encoding the stream information group, mapping the stream information group to a corresponding timeslot of the target channel, and delivering the stream information group to the UE.

7. The method according to claim 1, wherein the delivering the channel attribute parameter to a user equipment UE through a target channel comprises:
delivering the channel attribute parameter to the UE for at least one time in a preset update period, wherein the channel attribute parameter comprises channel attribute information, or the channel attribute parameter comprises channel attribute information and indication information; or
delivering the channel attribute parameter to the UE at a specified time interval in a preset update period, wherein the channel attribute parameter comprises channel attribute information, or the channel attribute parameter comprises channel attribute information and indication information.

8. The method according to claim 1, further comprising: updating the channel attribute parameter according to a preset update period, wherein the channel attribute parameter comprises channel attribute information, or the channel attribute parameter comprises channel attribute information and indication information.

9. The method according to claim 1, wherein the target channel is a fractional transmitted precoding indicator channel F-TPICH channel or a first channel.

10. The method according to any one of claims 3 to 9, wherein the channel attribute information is a dual-stream channel quality ratio CQR, a change value of a dual-stream CQR, an E-TFCI offset value, or a change value of an E-TFCI offset value.

11. The method according to any one of claims 4 to 9, wherein the indication information is a precoding indication PCI and/or rank.

12. A data sending method, comprising:
receiving, through a target channel, a channel attribute parameter and an SG that are delivered by a base station, wherein the channel attribute information and the SG are used for data scheduling of uplink multiple input multiple output MIMO;
determining a primary-stream E-TFCI according to the SG, and determining a transmission block size of a primary stream according to the primary-stream E-TFCI;
determining a secondary-stream E-TFCI according to the primary-stream E-TFCI and the channel attribute parameter, and determining a transmission block size of a secondary stream according to the secondary-stream E-TFCI; and
sending data to the base station according to the transmission block size of the primary stream and the transmission block size of the secondary stream.

13. The method according to claim 12, wherein the channel attribute parameter comprises channel attribute information, and the channel attribute information is a dual-stream CQR, and the determining a secondary-stream E-TFCI according to the primary-stream E-TFCI and the channel attribute parameter comprises:
determining a first power offset value of an enhanced dedicated physical data channel E-DPDCH according to the primary-stream E-TFCI;
determining a second power offset value of a secondary enhanced dedicated physical data channel S-E-DPDCH according to the first power offset value and the dual-stream CQR; and
determining the secondary-stream E-TFCI according to the second power offset value.

14. The method according to claim 12, wherein the channel attribute parameter comprises channel attribute information and the channel attribute information is a change value of a dual-stream CQR, and the determining a secondary-stream E-TFCI according to the primary-stream E-TFCI and the channel attribute parameter comprises:
determining a first power offset value of an enhanced dedicated physical data channel E-DPDCH according to the primary-stream E-TFCI;
determining a current dual-stream CQR according to the change value of the dual-stream CQR and a dual-stream CQR at a previous point of time;
determining a second power offset value of a secondary enhanced dedicated physical data channel S-E-DPDCH according to the first power offset value and the current dual-stream CQR; and
determining the secondary-stream E-TFCI according to the second power offset value.

15. The method according to claim 12, wherein the channel attribute parameter comprises channel attribute information and the channel attribute information is an E-TFCI offset value, and the determining a secondary-stream E-TFCI according to the primary-stream E-TFCI and the channel attribute parameter comprises:
obtaining a corrected E-TFCI offset value by correcting the E-TFCI offset value according to the primary-stream E-TFCI, and determining the secondary-stream E-TFCI according to the primary-stream E-TFCI and the corrected E-TFCI offset value.

16. The method according to claim 12, wherein the channel attribute parameter comprises channel attribute information and the channel attribute information is a change value of an E-TFCI offset value, and the determining a secondary-stream E-TFCI according to the primary-stream E-TFCI and the channel attribute parameter comprises:
determining a current E-TFCI offset value according to the change value of the E-TFCI offset value and an E-TFCI offset value at a previous point of time; and
obtaining a corrected E-TFCI offset value by correcting the current E-TFCI offset value according to the primary-stream E-TFCI, and determining the secondary-stream E-TFCI according to the primary-stream E-TFCI and the corrected E-TFCI offset value.

17. A base station, comprising:
a generating module, configured to generate a channel attribute parameter and a serving grant SG, wherein the channel attribute parameter and the SG are used for data scheduling of uplink multiple input multiple output MIMO; and
a sending module, configured to deliver the channel attribute parameter and the SG to a user equipment UE through a target channel, wherein the channel attribute parameter is used by the terminal to determine a primary-stream enhanced dedicated channel transport format combination indicator E-TFCI and a secondary-stream E-TFCI.

18. The base station according to claim 17, wherein the channel attribute parameter generated by the generating module comprises channel attribute information, and the sending module comprises:
a first sending unit, configured to deliver the channel attribute information to the UE through the target channel.

19. The base station according to claim 18, wherein the first sending unit is specifically configured to: after repeatedly encoding and modulating the channel attribute information, map the channel attribute information to a corresponding timeslot of the target channel and deliver the channel attribute information to the UE.

20. The base station according to claim 17, wherein the channel attribute parameter generated by the generating module comprises channel attribute information and indication information, and the sending module comprises:
a second sending unit, configured to deliver the channel attribute information and the indication information to the UE through the target channel.

21. The base station according to claim 20, wherein the second sending unit is specifically configured to: after repeatedly encoding and modulating the channel attribute information and the indication information, map the channel attribute information and the indication information to corresponding timeslots of the target channel respectively and deliver the channel attribute information and the indication information to the UE; or
the second sending unit is specifically configured to: combine the channel attribute information and the indication information into a stream information group, encode the stream information group, map the stream information group to a corresponding timeslot of the target channel, and deliver the stream information group to the UE.

22. The base station according to claim 17, wherein the sending module is specifically configured to deliver the channel attribute parameter to the UE for at least one time in a preset update period, and the channel attribute parameter comprises channel attribute information, or the channel attribute parameter comprises channel attribute information and indication information; or
the sending module is specifically configured to deliver the channel attribute parameter to the UE at a specified time interval in a preset update period, and the channel attribute parameter comprises channel attribute information, or the channel attribute parameter comprises channel attribute information and indication information.

23. The base station according to claim 17, further comprising:
an updating module, configured to update the channel attribute parameter according to a preset update period, wherein the channel attribute parameter comprises channel attribute information, or the channel attribute parameter comprises channel attribute information and indication information.

24. A user equipment, comprising:
a receiving module, configured to receive, through a target channel, a channel attribute parameter and an SG that are delivered by a base station, wherein the channel attribute information and the SG are used for data scheduling of uplink multiple input multiple output MIMO;
a first determining module, configured to determine a primary-stream E-TFCI according to the SG, and determine a transmission block size of a primary stream according to the primary-stream E-TFCI;
a second determining module, configured to determine a secondary-stream E-TFCI according to the primary-stream E-TFCI and the channel attribute parameter, and determine a transmission block size of a secondary stream according to the secondary-stream E-TFCI; and
a sending module, configured to send data to the base station according to the transmission block size of the primary stream and the transmission block size of the secondary stream.

25. The method according to claim 24, wherein the channel attribute parameter received by the receiving module comprises channel attribute information, and the channel attribute information is a dual-stream CQR, and the second determining module is specifically configured to: determine a first power offset value of an enhanced dedicated physical data channel E-DPDCH according to the primary-stream E-TFCI; determine a second power offset value of a secondary enhanced dedicated physical data channel S-E-DPDCH according to the first power offset value and the dual-stream CQR; and determine the secondary-stream E-TFCI according to the second power offset value.

26. The method according to claim 24, wherein the channel attribute parameter received by the receiving module comprises channel attribute information, and the channel attribute information is a change value of a dual-stream CQR, and the second determining module is specifically configured to: determine a first power offset value of an enhanced dedicated physical data channel E-DPDCH according to the primary-stream E-TFCI; determine a current dual-stream CQR according to the change value of the dual-stream CQR and a dual-stream CQR at a previous point of time; determine a second power offset value of a secondary enhanced dedicated physical data channel S-E-DPDCH according to the first power offset value and the current dual-stream CQR; and determine the secondary-stream E-TFCI according to the second power offset value.

27. The method according to claim 24, wherein the channel attribute parameter received by the receiving module comprises channel attribute information, and the channel attribute information is an E-TFCI offset value, and the second determining module is specifically configured to: obtain a corrected E-TFCI offset value by correcting the E-TFCI offset value according to the primary-stream E-TFCI; and determine the secondary-stream E-TFCI according to the primary-stream E-TFCI and the corrected E-TFCI offset value.

28. The method according to claim 24, wherein the channel attribute parameter received by the receiving module comprises channel attribute information, and the channel attribute information is a change value of an E-TFCI offset value, and the second determining module is specifically configured to: determine a current E-TFCI offset value according to the change value of the E-TFCI offset value and an E-TFCI offset value at a previous point of time; obtain a corrected E-TFCI offset value by correcting the current E-TFCI offset value according to the primary-stream E-TFCI; and determine the secondary-stream E-TFCI according to the primary-stream E-TFCI and the corrected E-TFCI offset value.

29. A communications system, comprising: a base station and a user equipment, wherein:
the base station is configured to: generate a channel attribute parameter and a serving grant SG, wherein the channel attribute parameter and the SG are used for data scheduling of uplink multiple input multiple output MIMO; and deliver the channel attribute parameter and the SG to the user equipment UE through a target channel, wherein the channel attribute parameter is used by the terminal to determine a primary-stream enhanced dedicated channel transport format combination indicator E-TFCI and a secondary-stream E-TFCI; and
the user equipment is configured to: receive, through the target channel, the channel attribute parameter and the SG that are delivered by the base station, wherein the channel attribute information and the SG are used for the data scheduling of the uplink multiple input multiple output MIMO; determine a primary-stream E-TFCI according to the SG, and determine a transmission block size of a primary stream according to the primary-stream E-TFCI; determine a secondary-stream E-TFCI according to the primary-stream E-TFCI and the channel attribute parameter, and determine a transmission block size of a secondary stream according to the secondary-stream E-TFCI; and send data to the base station according to the transmission block size of the primary stream and the transmission block size of the secondary stream.

30. The communications system according to claim 29, wherein:
the base station comprises:
a generating module, configured to generate the channel attribute parameter and the serving grant SG, wherein the channel attribute parameter and the SG are used for the data scheduling of the uplink multiple input multiple output MIMO; and
a sending module, configured to deliver the channel attribute parameter and the SG to the user equipment UE through the target channel, wherein the channel attribute parameter is used by the terminal to determine the primary-stream enhanced dedicated channel transport format combination indicator E-TFCI and the secondary-stream E-TFCI; and
the user equipment comprises:
a receiving module, configured to receive, through the target channel, the channel attribute parameter and the SG that are delivered by the base station, wherein the channel attribute information and the SG are used for the data scheduling of the uplink multiple input multiple output MIMO;
a first determining module, configured to determine the primary-stream E-TFCI according to the SG, and determine the transmission block size of the primary stream according to the primary-stream E-TFCI;
a second determining module, configured to determine the secondary-stream E-TFCI according to the primary-stream E-TFCI and the channel attribute parameter, and determine the transmission block size of the secondary stream according to the secondary-stream E-TFCI; and
a sending module, configured to send data to the base station according to the transmission block size of the primary stream and the transmission block size of the secondary stream.
